(19) Europäisches Patentamt / European Patent Office / Office européen des brevets

(11) **EP 1 482 290 B1**

(12) **FASCICULE DE BREVET EUROPEEN**

(45) Date de publication et mention
de la délivrance du brevet:
**26.12.2012 Bulletin 2012/52**

(51) Int Cl.:
*G01L 5/28* *(2006.01)*      *B60T 13/74* *(2006.01)*
*F16D 65/18* *(2006.01)*

(21) Numéro de dépôt: **04291184.2**

(22) Date de dépôt: **07.05.2004**

(54) **Estimation de la force de serrage d'un étrier électromécanique**

Bremskraftschätzung einer elektromechanischen Bremse

Force estimation of an electromechanical brake

(84) Etats contractants désignés:
**DE FR**

(30) Priorité: **30.05.2003 FR 0306587**

(43) Date de publication de la demande:
**01.12.2004 Bulletin 2004/49**

(73) Titulaire: **BWI Company Limited S.A.**
**1628 Luxembourg (LU)**

(72) Inventeur: **Gayed, Atef**
**95670 Marly la Ville (FR)**

(74) Mandataire: **Laget, Jean-Loup**
**Brema-Loyer**
**Le Centralis**
**63 avenue du Général Leclerc**
**92340 Bourg-la-Reine (FR)**

(56) Documents cités:
**DE-A- 10 205 013    US-A1- 2001 030 462**

**Description**

La présente invention concerne un procédé d'évaluation de la force de serrage exercée par un étrier de frein électromécanique destiné à équiper des véhicules comme des automobiles, des camions ou l'équivalent.

Un étrier de frein électromécanique est muni d'un capteur de force de serrage. Un tel capteur de force est par exemple un capteur piézoélectrique émettant un signal électrique proportionnel à la déformation qu'il subit. Le capteur de force étant positionné à l'intérieur de l'étrier sur le chemin des forces, la contrainte qu'il subit n'est autre que la force de serrage appliquée par les plaquettes de frein sur le disque de frein.

Le capteur de force de serrage a pour fonction de fournir au système de commande de l'étrier une information sur la force de serrage réellement exercée par les plaquettes de frein sur le disque de frein. Cette information permet au système de réaliser trois types d'opérations :

- une première opération consiste, dans un mode d'actionnement de serrage de l'étrier, à réguler la force de serrage exercée par les plaquettes de frein sur le disque de frein afin d'atteindre une force de serrage cible requise lors de l'actionnement de l'étrier ;
- une deuxième opération consiste, dans un mode d'actionnement de desserrage de l'étrier, à entamer une procédure de réinitialisation de ce dernier lorsque la force de serrage mesurée franchit un seuil prédéfini, pour repositionner les plaquettes de frein à une distance optimale du disque de frein ; et,
- une troisième opération consiste à mettre en place des procédures de contrôle et de diagnostic des pannes de l'étrier de frein électromécanique.

Les capteurs de force de serrage actuellement utilisés présentent un grand nombre d'inconvénients.

Il s'agit en premier lieu de capteurs nouveaux qui sont difficiles à produire, à maintenir en état de fonctionnement et qui ont un coût élevé. De plus, de tels capteurs doivent pouvoir être utilisés sur une gamme de force de serrage étendue puisqu'ils doivent permettre de mesurer des forces allant de quelques newtons à plusieurs dizaines de kilo newtons.

Des exigences de qualité élevées sont requises sur le signal de mesure généré par ces capteurs. Par exemple, les capteurs de force de serrage doivent pouvoir mesurer la force de serrage avec une précision suffisante pour autoriser la gestion du glissement de la roue par un système d'anti-blocage des roues (ABS). Or, les capteurs de force de serrage actuellement utilisés produisent un signal fortement bruité, présentant des effets d'hystérésis. Tout ceci rend l'utilisation des capteurs de force de serrage incompatible avec les besoins des systèmes de freinage.

Enfin, de tels capteurs sont des pièces fragiles dont la durée de vie est faible. En cas de détérioration du capteur de force de serrage, le seul changement du capteur s'avère délicat et il est plus commode de remplacer la totalité de l'étrier de frein électromécanique.

En conséquence, il y a un besoin de s'affranchir des inconvénients liés aux capteurs de force de serrage.

Le but de la présente invention est d'estimer la force de serrage appliquée par un étrier de frein électromécanique.

Une solution selon l'état de la technique est décrit dans le document DE 102 05 013 A.

La présente invention a pour objet un procédé d'estimation de force de serrage dans un étrier de frein électromécanique, l'étrier électromécanique comportant deux plaquettes de frein placées respectivement de part et d'autre d'un disque de frein, un moteur électrique rotatif, un mécanisme de réduction de vitesse et de conversion couplant un arbre dudit moteur électrique à au moins une des plaquettes de frein, le mécanisme étant apte à convertir le mouvement de rotation de l'arbre moteur en un mouvement de translation des plaquettes de frein l'une vers ou à l'écart de l'autre selon le sens de rotation de l'arbre, un capteur de position angulaire apte à mesurer un angle de rotation de l'arbre, et un capteur d'intensité apte à mesurer une intensité d'un courant alimentant le moteur électrique, caractérisé en ce qu'il comporte les étapes consistant à :

- acquérir une valeur instantanée d'angle de rotation mesurée par le capteur de position angulaire en tant qu'angle mesuré ;
- acquérir une valeur instantanée d'intensité mesurée par le capteur d'intensité en tant qu'intensité mesurée ; puis, par une boucle directe, à :

- estimer une valeur instantanée de couple de charge appliquée sur l'arbre en tant que couple de charge estimé, à partir de l'angle mesuré, de l'intensité mesurée et d'une variable d'asservissement calculée par une boucle de rétroaction ; et,
- calculer une valeur instantanée de force de serrage en tant que force de serrage estimée, à partir dudit couple de charge estimé ;

la boucle de rétroaction consistant à :

- calculer une valeur instantanée d'angle de rotation en tant qu'angle estimé, à partir de grandeurs d'entrée comportant au moins le couple de charge estimé et l'intensité mesurée, en utilisant un modèle linéaire du comportement électrique et mécanique du moteur électrique; et,
- calculer une valeur instantanée de la variable d'asservissement par différence entre l'angle mesuré et l'angle estimé.

De préférence, le procédé comporte les étapes consistant à :

- calculer une valeur instantanée de vitesse de rotation en tant que vitesse mesurée, à partir dudit angle mesuré ; et,
- calculer une valeur instantanée de friction en tant que friction mesurée, par multiplication de la vitesse mesurée par un coefficient de friction prédéterminé ;

les grandeurs d'entrée de l'étape de calcul de l'angle estimé comportant, en outre, la vitesse mesurée.

De préférence, l'étape de calcul de l'angle estimé comporte les sous étapes consistant à :

- a) calculer une valeur instantanée de l'accélération de rotation en tant qu'accélération estimée, à partir des grandeurs d'entrée de la boucle de rétroaction ;
- c) intégrer l'accélération estimée pour déterminer une valeur instantanée de vitesse de rotation en tant que vitesse estimée ;
- e) intégrer la vitesse estimée pour déterminer une valeur instantanée de l'angle estimé.

De préférence, la boucle de rétroaction comporte une étape consistant à calculer un gain en vitesse et un gain en accélération à partir de ladite variable d'asservissement, et le gain en vitesse et le gain en accélération constituent des paramètres du modèle linéaire utilisé dans le calcul de l'angle estimé.

De préférence, l'étape de calcul de l'angle estimé comporte les sous-étapes supplémentaires consistant à :

- b) ajouter le gain en accélération à l'accélération estimée avant l'intégration de l'accélération pour obtenir la vitesse estimée ; et,
- d) ajouter le gain en vitesse à la vitesse estimée avant l'intégration de la vitesse pour obtenir l'angle estimé.

De préférence, le gain en vitesse et le gain en accélération sont respectivement proportionnels à la variable d'asservissement.

Dans un autre mode de réalisation du procédé, l'étrier de frein électromécanique comporte également un capteur de force de serrage apte à mesurer une valeur instantanée de force de serrage appliquée par les plaquettes de frein sur le disque de frein, et le procédé comporte les étapes consistant à :

- acquérir une valeur instantanée de force de serrage mesurée par le capteur de force de serrage en tant que force de serrage mesurée ; et,
- comparer la force de serrage estimée avec ladite force de serrage mesurée, pour diagnostiquer des pannes de l'étrier et/ou fermer une boucle de régulation de l'étrier soit sur la force de serrage mesurée soit sur la force de serrage estimée.

La présente invention a également pour objet un dispositif pour la mise en oeuvre du procédé ci-dessus, comportant un étrier de frein électromécanique ayant deux plaquettes de frein placées respectivement de part et d'autre d'un disque de frein, un moteur électrique rotatif, un mécanisme de réduction de vitesse et de conversion couplant un arbre du moteur électrique à au moins une des plaquettes de frein, le mécanisme étant apte à convertir le mouvement de rotation de l'arbre en un mouvement de translation des plaquettes de frein l'une vers ou à l'écart de l'autre selon le sens de rotation de l'arbre, un capteur de position angulaire apte à mesurer un angle de rotation de l'arbre, et un capteur d'intensité apte à mesurer une intensité d'un courant alimentant le moteur électrique, caractérisé en ce qu'il comporte :

- un moyen d'acquisition d'angle de rotation, relié au capteur de position angulaire pour acquérir des valeurs instantanées d'angle de rotation en tant qu'angle mesuré ;
- un moyen d'acquisition d'intensité, relié audit capteur d'intensité pour acquérir des valeurs instantanées d'intensité en tant qu'intensité mesurée ;
- au moins une mémoire ;

et des moyens directs d'estimation de force comprenant :

- un module d'estimation du couple, apte à estimer le couple de charge appliqué sur l'arbre à partir de l'angle mesuré, de l'intensité mesurée, ainsi que d'une variable d'asservissement obtenue par des moyens de rétroaction ; et,
- un module de modélisation de l'étrier apte à calculer la force de serrage estimée à partir du couple de charge estimé,

les moyens de rétroaction comportant :

- un module d'estimation d'angle, apte à estimer une valeur d'angle de rotation en tant qu'angle estimé à partir de grandeurs d'entrée constituées, au moins, par le couple de charge estimé et l'intensité mesurée, en utilisant un modèle linéaire du comportement électrique et mécanique du moteur électrique; et,
- un module d'asservissement , apte à soustraire l'angle estimé de l'angle mesuré pour déterminer la variable d'asservissement.

De préférence, le dispositif comporte :

- un module d'état du moteur, apte à calculer une valeur de vitesse de rotation en tant que vitesse mesurée à partir de l'angle mesuré ; et,
- un module de friction, apte à calculer une friction mesurée par multiplication de la vitesse mesurée par un coefficient de friction prédéterminé,

la friction mesurée constitue une grandeur d'entrée des moyens de rétroaction.
De préférence, le module d'estimation d'angle comporte :

- un module d'estimation de l'accélération, apte à calculer une accélération estimée à partir des grandeurs d'entrée ;
- un intégrateur d'accélération apte à déterminer une valeur instantanée d'une vitesse estimée à partir de l'accélération estimée ;
- un intégrateur de vitesse apte à déterminer une valeur instantanée de l'angle de rotation estimé à partir de la vitesse estimée.

De préférence, les moyens de rétroaction comportent :

- un module de gain en vitesse ; et,
- un module de gain en accélération,

les modules de gain en vitesse et en accélération étant aptes à calculer, respectivement, le gain en vitesse et le gain en accélération à partir de la variable d'asservissement.
De préférence, le module d'estimation d'angle comporte les éléments suivants :

- un module d'addition d'accélération, pour ajouter l'accélération estimée au gain en accélération ; et,
- un module d'addition de vitesse, pour ajouter la vitesse estimée au gain en vitesse.

De préférence, les modules de gain en vitesse et en accélération sont des modules proportionnels dont la variable de sortie est proportionnelle à la variable d'entrée.
Dans un autre mode de réalisation, l'étrier de frein électromécanique comporte également un capteur de force de serrage apte à mesurer une valeur instantanée de force de serrage appliquée par les plaquettes de frein sur le disque de frein, et le dispositif comporte :

- un moyen d'acquisition de force de serrage, relié au capteur de force de serrage pour acquérir des valeurs instantanées de force de serrage ;
- un module de diagnostic, pour diagnostiquer des pannes de l'étrier à partir de la force de serrage mesurée et de la force de serrage estimée en tant que force de serrage mesurée ; et,
- un commutateur possédant deux états pour fermer la boucle de régulation de l'étrier soit sur la force estimée soit sur la force mesurée.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

- la figure 1 représente une coupe d'un étrier de frein électromécanique utilisable dans divers modes de réalisation du dispositif selon l'invention ;
- la figure 2 représente une vue schématique d'un système de commande de l'étrier de la figure 1, utilisable dans divers modes de réalisation du dispositif selon l'invention ;
- la figure 3 est un diagramme détaillant une chaîne de régulation du système de commande d'un étrier, selon l'art antérieur ;
- la figure 4 est un diagramme détaillant une chaîne de régulation du système de commande d'un l'étrier selon un premier mode de réalisation du dispositif selon l'invention ;
- la figure 5 est un schéma bloc d'un programme permettant la mise en oeuvre du procédé d'estimation de la force de serrage appliquée par l'étrier de la figure 1 ;
- la figure 6A montre des courbes indiquant des évolutions concomitantes de la force de serrage mesurée et de la force de serrage estimée en fonction du temps en boucle ouverte de régulation de l'étrier ;
- la figure 6B montre des courbes indiquant des évolutions concomitantes de la force de serrage mesurée et de la force de serrage estimée en fonction du temps en boucle fermée de régulation de l'étrier ; et,
- la figure 7 est un diagramme détaillant une chaîne de régulation du système de commande d'un étrier, selon un autre mode de réalisation du dispositif selon l'invention.

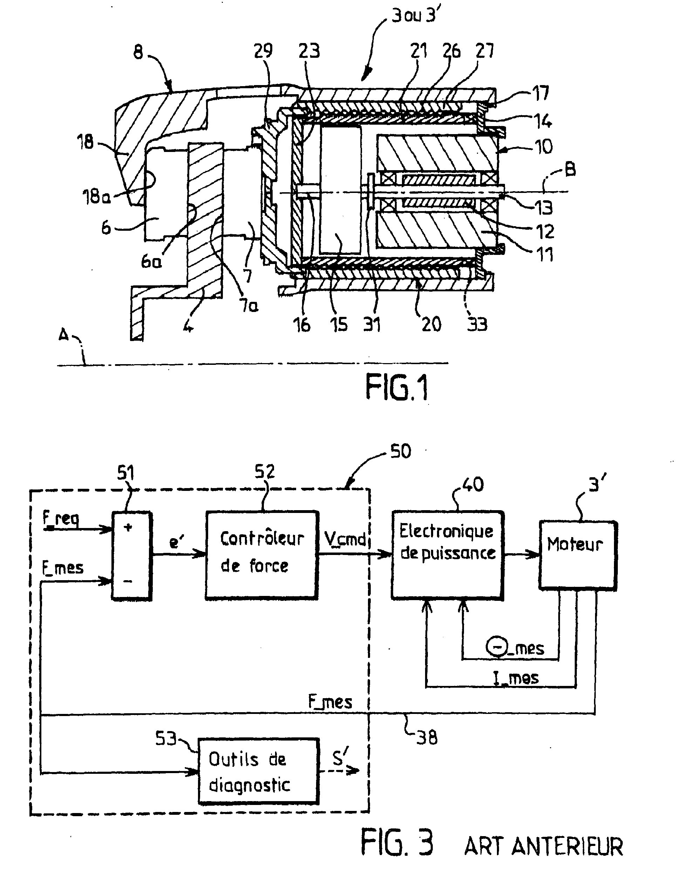

La figure 1 des dessins placés en annexe représente un étrier de frein électromécanique 3 ou 3' utilisable dans divers modes de réalisation du dispositif selon l'invention. L'étrier 3 ou 3' peut équiper le système de freinage d'un véhicule. La partie gauche de la figure 1 correspond au côté de l'étrier placé en regard de la roue. Par convention, nous désignerons ce côté comme le côté roue, par opposition au côté carrosserie correspondant à la partie droite de la figure 1. L'axe A représente l'axe de la roue. L'étrier 3 ou 3' comporte un boîtier 8 à l'intérieur duquel sont logés un moteur électrique 10, une vis à billes 20 et des plaquettes de frein externe 6 et interne 7 ayant des surfaces de friction respectives 6a et 7a disposées de part et d'autre d'un disque de frein 4 lié à la roue (non montrée) du véhicule. Le boîtier 8 est monté de manière coulissante selon la direction perpendiculaire au disque de frein 4 sur une chape, non représentée, qui est solidaire de la caisse du véhicule.

Le boîtier 8 comporte, côté roue, une griffe 18 faite d'une seule pièce avec le boîtier 8 et ayant une surface interne 18a contre laquelle la plaquette de frein externe 6 est fixée. Le boîtier 8 comporte, côté carrosserie, un épaulement 17. Un élément de maintien 14, placé contre l'épaulement 17 et auquel est fixé le moteur électrique 10, permet de solidariser ce dernier au boîtier 8.

Le moteur électrique utilisé dans un étrier de frein électromécanique peut être n'importe quel moteur électrique. Sur la figure 1, le moteur électrique 10 est un moteur à aimant permanent. Le moteur électrique 10 comporte un stator bobiné 11 et un rotor 12, constitué d'un aimant permanent et apte à tourner autour de l'axe B lorsqu'une puissance électrique est fournie aux enroulements du stator 11. Le moteur électrique 10 comporte un arbre moteur 13 solidaire du rotor 12. Lorsque ce dernier est mis en mouvement, il transmet son mouvement de rotation à l'arbre moteur 13.

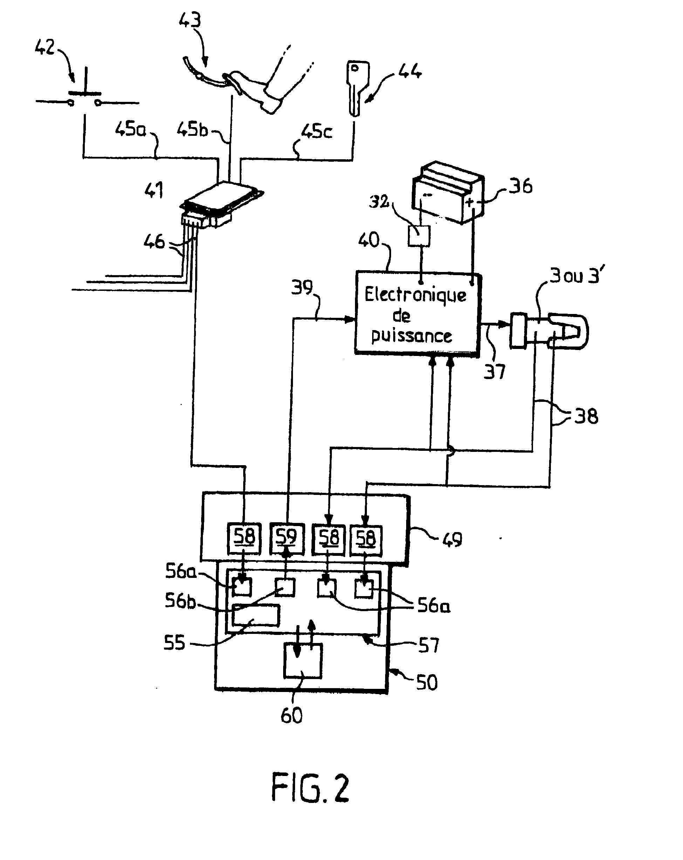

Afin de piloter le fonctionnement du moteur électrique 10 à aimant permanent, un capteur de position angulaire 31 est positionné sur l'arbre moteur 13 en sortie du moteur électrique 10. Le capteur de position angulaire 31 permet de mesurer l'angle de rotation de l'arbre 13 et donc du rotor 12, par rapport au stator 11 fixe. Le capteur angulaire 31 est typiquement, par exemple, un capteur à effet Hall. Par ailleurs, un capteur d'intensité (non montré) permet de mesurer l'intensité du courant électrique traversant le bobinage du stator 11. Le capteur d'intensité 32 (figure 2) est typiquement une résistance montée en série avec la batterie entre les bornes de l'électronique de puissance jouant essentiellement le rôle d'un onduleur. La différence de potentiel générée entre les bornes de la résistance est proportionnelle à l'intensité qui traverse le bobinage du stator 11. En variante, et par exemple dans le cas d'un moteur électrique possédant trois phases, deux capteurs à effet Hall pourraient être utilisés afin d'accéder à la valeur de l'intensité.

En sortie du moteur électrique 10, l'arbre 13 est couplé avec une boîte de réduction 15 possédant un arbre de sortie 16. La boîte de réduction 15 permet d'obtenir un rapport élevé entre la vitesse de rotation de l'arbre 13 et la vitesse de rotation de l'arbre de sortie 16, par exemple typiquement de trente pour un. Pour une rotation d'un angle donné de l'arbre 13, l'arbre de sortie 16 tournera d'un angle trente fois plus faible. En revanche, l'intensité du couple disponible sur l'arbre de sortie 16 est trente fois plus importante que l'intensité du couple disponible sur l'arbre 13.

La vis à billes 20 est couplée à l'arbre de sortie 16. Cette vis à billes 20 comporte une partie vis 21, des billes 26 et une partie écrou 27. La partie vis 21 est de forme cylindrique creuse d'axe B et comporte un alésage dans lequel sont logés le moteur électrique 10 et la boîte de réduction 15. La partie vis 21 est liée à l'arbre de sortie 16 par l'intermédiaire d'un flasque 23. Le mouvement de rotation de l'arbre de sortie 16 est ainsi transmis à la partie vis 21 de la vis à billes 20.

La surface extérieure de la vis 21 et la surface intérieure de la partie écrou 27 sont filetées de manière à définir entre elles un canal hélicoïdal recevant les billes 26. La partie écrou 27 est guidée dans le boîtier 8 par des moyens de guidage (non montrés) de manière à ce qu'elle puisse se déplacer seulement en translation, parallèlement à l'axe B. Cet agencement permet à la partie vis 21, animée d'un mouvement de rotation par rapport au boîtier 8, d'entraîner la partie écrou 27 dans un mouvement de translation selon l'axe B par rapport au boîtier 8.

Du côté roue, la partie écrou 27 est liée à un piston 29 qui porte la plaquette de frein interne 7. Lorsque la partie écrou 27 est animée d'un mouvement de translation vers le côté roue, la plaquette de frein interne 7 se rapproche de la plaquette de frein externe 6. Une fois que les surfaces 6a et 7a entrent en contact avec le disque de frein 4, l'étrier 3 ou 3' applique une force de serrage sur le disque de frein 4. Cette force de serrage est dirigée selon l'axe B et est donc perpendiculaire aux surfaces 6a et 7a.

Les plaquettes de frein 6 et 7 sont constituées d'un matériau possédant un coefficient de frottement élevé. La force de serrage crée une force de frottement dirigée perpendiculairement à l'axe B, tangentiellement aux surfaces 6a et 7a. La force de frottement s'oppose à la rotation du disque de frein 4 et a pour conséquence de ralentir le mouvement de rotation de la roue autour de son axe A et de freiner le véhicule.

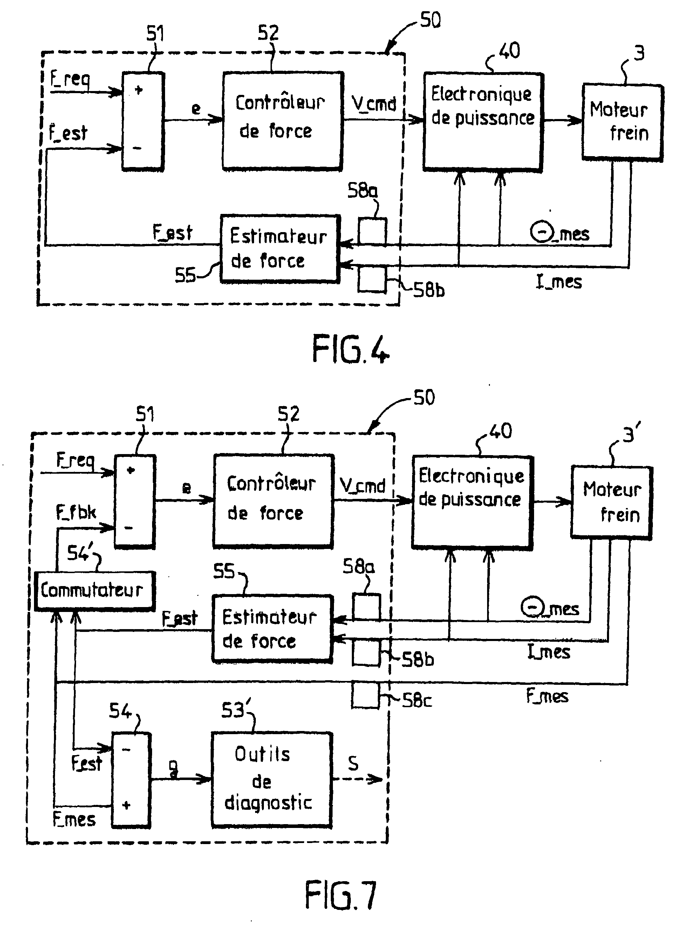

L'étrier comporte, de manière facultative, un capteur de force de serrage 33 représenté en pointillés sur la figure 1. Dans un premier mode de réalisation du dispositif actuellement préféré, l'étrier ne possède pas de capteur de force de serrage. Un tel étrier portera la référence numérique 3 dans ce qui suit. Par exemple, un tel étrier 3 est utilisé dans la chaîne de régulation représentée sur la figure 4. Dans un deuxième mode de réalisation, l'étrier comporte un capteur de force de serrage 33. Un tel étrier sera identifié par la référence 3' dans ce qui suit. Par exemple, un tel étrier 3' est utilisé dans la chaîne de régulation représentée sur la figure 7.

Le capteur de force de serrage 33 est de forme annulaire, placé entre la portion de vis 21 et l'élément de maintien 14. Ce capteur de force de serrage peut, par exemple, être un capteur piézoélectrique qui, en se déformant sous l'effet d'une contrainte extérieure, émet un signal électrique corrélé à l'intensité de la contrainte, c'est-à-dire à l'intensité de la force de serrage appliquée par les plaquettes de frein 6 et 7 sur le disque de frein 4.

En se référant maintenant à la figure 2, le système de commande d'un étrier de frein électromécanique va être décrit d'une manière générale. Ce système de commande convient pour les modes de réalisation du dispositif selon l'invention.

Certaines actions du conducteur du véhicule relatives au freinage sont détectées par des capteurs. Par exemple, le capteur 42 émet un signal lors de l'utilisation du frein de parking, le capteur 43 émet un signal lorsque la pédale de frein est enfoncée, et le capteur 44 émet un signal lorsque la clé de contact est utilisée pour démarrer le véhicule. Les signaux générés par ces différents capteurs sont émis le long des liaisons 45a, 45b et 45c reliées à un calculateur de freinage 41.

Le calculateur de freinage 41 a pour but, en fonction des informations sur l'état du véhicule qui lui parviennent, de calculer les valeurs des forces de serrage cibles qui doivent être appliquées sur chacune des roues du véhicule. Pour cela, le calculateur de freinage 41 exécute des programmes tels que le contrôle dynamique de stabilité (ESP), l'antiblocage des roues (ABS) ou d'autre programmes. En sortie, le calculateur de freinage 41 est relié par des liaisons 46 à chacun des contrôleurs 50 déportés actionnant les étriers de frein électromécaniques 3 ou 3' équipant le véhicule. A une fréquence définie, le calculateur de freinage 41 émet un signal de force de serrage cible correspondant à la valeur de la force de serrage cible que doit appliquer l'étrier 3 ou 3'

Par ailleurs, le véhicule comporte une source de courant continu, tel qu'une batterie 36, de manière à générer une puissance électrique. Un système électronique de puissance 40, branché à la batterie 36, alimente en courant électrique le moteur électrique de l'étrier 3 ou 3'. En fonction de la valeur instantanée de l'intensité $I_{mes}$ du courant circulant dans les bobinages du stator 11 du moteur électrique 10 (figure 1) mesurée par le capteur d'intensité 32, en fonction de la valeur instantanée de l'angle de rotation $\theta_{ref}$ mesuré par le capteur angulaire 31, et en fonction d'un signal de commande en tension émis par le contrôleur 50 sur la liaison 39, le système électronique de puissance 40 alimente le moteur électrique 10 avec un courant électrique adapté au moyen de la liaison 37.

Le contrôleur 50, placé à proximité de l'étrier qu'il contrôle, comporte au moins une mémoire 57 et un processeur 60 susceptible d'exécuter, en temps réel, des programmes, tel qu'un programme d'estimation de la force de serrage 55, stockés dans ladite mémoire 57. Le contrôleur 50 possède une interface 49 d'entrée-sortie. Des liaisons d'entrée, telles que la liaison 46 reliée au calculateur de freinage 41 ou les liaisons 38 reliés à des capteurs placés sur l'étrier 3 ou 3', ainsi que des liaisons de sortie, telle que la liaison 39, sont connectées à l'interface 49, respectivement en entrée et en sortie du contrôleur 50. Pour chaque liaison d'entrée, l'interface 49 possède des moyens d'acquisitions 58 permettant de convertir le signal entrant en une valeur mémorisée dans un espace mémoire 56a correspondant de la mémoire 57. Pour chaque liaison de sortie, l'interface 49 possède des moyens d'émission 59 permettant de convertir une valeur mémorisée dans un espace mémoire 56b correspondant de la mémoire 57, en un signal sortant.

Le contrôleur 50 régule la force de serrage appliquée par l'étrier 3 ou 3' en commandant la puissance électrique délivrée à ce dernier. La régulation a pour but de faire correspondre la force de serrage appliquée par l'étrier 3 ou 3' à la force de serrage cible requise par le calculateur de freinage 41. Afin de réguler la force de serrage, le système de commande de l'étrier comporte une boucle de régulation de la force de serrage qui va maintenant être décrite.

La figure 3 décrit de manière schématique la boucle de régulation selon l'art antérieur d'un étrier 3' comportant un capteur de force de serrage 33. En conséquence, le contrôleur 50, relié au capteur de force de serrage par une liaison d'entrée 38, est apte à acquérir une valeur de force de serrage mesurée $F_{mes}$.

Le contrôleur 50 exécute périodiquement un module de comparaison 51 conduisant au calcul d'une variable de régulation e' obtenue, par exemple, par différence entre la force de serrage cible $F_{req}$ et la force de serrage mesurée

$F_{mes}$. Le contrôleur 50 exécute ensuite un programme de contrôle de force 52 calculant une tension de commande $V_{cmd}$ en fonction de la valeur de la variable de régulation e'. La tension de commande $V_{cmd}$ est ensuite convertie en un signal de commande en tension émis le long de la liaison de sortie 39 en direction de l'électronique de puissance 40 gérant l'alimentation électrique de l'étrier 3'.

Par ailleurs, le contrôleur 50 exécute différents programmes de diagnostic 53 sur la base, entre autre, de la force de serrage mesurée $F_{mes}$. Ces programmes de diagnostic 53 ont pour but de calculer la valeur de différentes variables d'état S' de l'étrier 3' caractérisant le fonctionnement de ce dernier.

En se référant maintenant à la figure 4 représentant un premier mode de réalisation de l'invention, l'étrier 3 ne comporte pas de capteur de force de serrage. Dans cette figure, les éléments qui ont déjà été décrits plus haut portent les mêmes chiffres de référence. Afin de réguler le fonctionnement de l'étrier 3, une estimation de la force de serrage $F_{est}$ est réalisée à partir des informations d'angle mesuré $\theta_{mes}$ et d'intensité mesurée $I_{mes}$. Une variable de régulation e est calculée au moyen du module de comparaison 51 par différence entre la force de serrage cible $F_{req}$ et la force de serrage estimée $F_{est}$. Pour effectuer l'estimation de la force de serrage estimée $F_{est}$, le contrôleur 50 réalise périodiquement l'acquisition des variables d'angle mesuré $\theta_{mes}$ et d'intensité mesurée $I_{mes}$, grâce aux moyens d'acquisition 58a et 58b respectivement connectés au capteur angulaire 31 et au capteur d'intensité en entrée du contrôleur 50. Le contrôleur 50 exécute périodiquement le programme d'estimation de la force 55. Par ailleurs et bien que cela ne soit pas représenté sur la figure 4, la valeur de la force de serrage estimée $F_{est}$ peut être utilisée par des outils de diagnostic équivalents aux outils de diagnostic 53 de la figure 3.

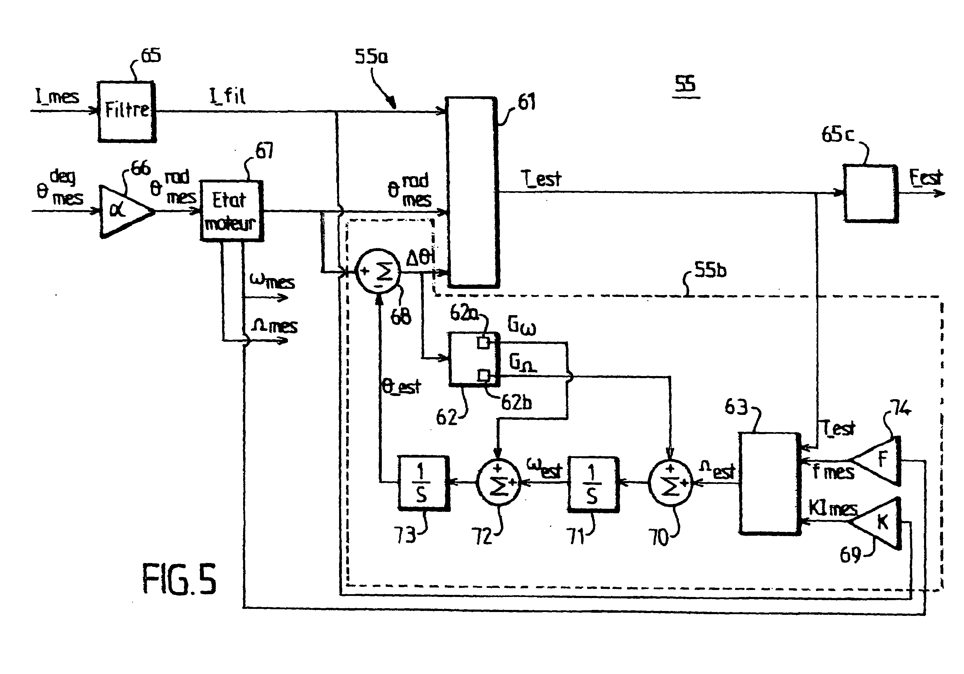

Avant de décrire de manière détaillée le programme d'estimation de la force 55 en relation avec la figure 5, il est nécessaire de rappeler une modélisation possible du comportement mécanique et du comportement électrique du moteur électrique 10 de l'étrier 3.

D'une manière générale, l'équation électrique du moteur électrique 10 auquel est appliquée une tension u(t) et une intensité i(t) s'écrit :

$$u(t) = Ri(t) + L\frac{di(t)}{dt} + K\omega(t)$$

où R est la résistance équivalente du bobinage du stator 11 et L son inductance, et où la force électromotrice est proportionnelle à la vitesse angulaire $\omega(t)$ de l'arbre. Cette équation peut être réécrite en isolant la dérivée temporelle de l'intensité à la gauche de l'égalité :

$$\frac{d\,i(t)}{dt} = -\frac{R}{L}i(t) - \frac{K}{L}\omega(t) + \frac{1}{L}u(t) \qquad (1)$$

Par ailleurs, la vitesse angulaire $\omega(t)$ n'est autre que la dérivée temporelle de l'angle de rotation $\theta(t)$ de l'arbre :

$$\frac{d\theta(t)}{dt} = \omega(t) \qquad (2)$$

Enfin, l'accélération angulaire $\Omega(t)$, qui est la dérivée temporelle de la vitesse angulaire, est donnée par l'équation fondamentale de la dynamique :

$$J\frac{d\omega(t)}{dt} = T - f\omega(t)$$

où J est le moment angulaire du moteur électrique ; où $f_\omega(t)$ est une force de frottement visqueux proportionnelle à la vitesse angulaire s'opposant au mouvement du moteur électrique ; et, où T est le couple appliqué sur l'arbre. Le couple T est la somme du couple électromagnétique $T_{em}$ exercé par le stator sur le rotor et du couple de charge $T_{charge}$ : $T = T_{em} - T_{charge}$ Or le couple électromagnétique $T_{em}$ est proportionnel à l'intensité i(t). Par un bilan énergétique on montrerait que la constante de proportionnalité n'est autre que la constante K introduite lors du calcul de la force électromotrice :

$$T_{em} = Ki(t)$$

Donc, l'équation fondamentale de la dynamique peut être réécrite :

$$\Omega(t) = \frac{d\omega(t)}{dt} = \frac{K}{J}i(t) - \frac{f}{J}\omega(t) - \frac{1}{J}T_{charge} \qquad (3)$$

Un point caractéristique du comportement du moteur électrique est donné pour un angle de rotation θ(t) constant. Dans ce cas, le couple de charge $T_{charge}$ est égal au couple électromagnétique $T_{em}$ et est donc proportionnel à l'intensité :

$$T_{charge} = Ki(t)$$

La figure 5 est un schéma bloc du programme d'estimation de la force 55. Ce programme peut être écrit dans différents langages, par exemple en C, puis compilé et mémorisé dans la mémoire 57 afin d'être exécuté par le processeur 60 du contrôleur 50 en temps réel. La périodicité de l'exécution de ce programme est, par exemple, de 10μs.

Les entrées du programme d'estimation de la force 55 sont constituées par l'angle mesuré $\theta_{mes}$ et l'intensité mesurée $I_{mes}$ lues à partir des espaces mémoire 56a correspondants. La sortie du programme d'estimation de la force 55 est constituée par la force de serrage estimée $F_{est}$ écrite dans un espace mémoire 56b correspondant.

Le programme d'estimation de la force 55 comporte une boucle directe 55a et une boucle de rétroaction 55b.

La boucle directe 55a permettant d'estimer la force de serrage $F_{est}$ va d'abord être détaillée.

Afin d'atténuer les variations rapides de l'intensité mesurée $I_{mes}$, un filtre 65 permet de calculer une intensité filtrée $I_{fil}$. Par exemple, le filtre 65 réalise une moyenne temporelle sur plusieurs périodes de l'intensité mesurée $I_{mes}$.

La valeur de l'angle mesurée $\theta_{mes}$ étant donnée en degrés, un module de conversion 66 permet de réaliser une conversion de la valeur de l'angle mesuré en degrés $\theta_{mes}^{deg}$ en une valeur de l'angle mesuré en radians $\theta_{mes}^{rad}$. Le module de conversion 66 comporte une simple opération de proportionnalité.

Un module d'état du moteur 67 permet de calculer les grandeurs dynamiques instantanées du moteur électrique 10 que sont la vitesse angulaire et l'accélération angulaire. Par exemple, la vitesse angulaire est donnée par la variation de la valeur de l'angle mesuré en radians $\theta_{mes}^{rad}$ entre l'instant considéré et un instant antérieur distant de N périodes. Par exemple, N peut valoir trois périodes. Puisque la vitesse angulaire est calculée à partir de l'angle mesuré $\theta_{mes}$, nous parlerons, dans ce qui suit, de vitesse mesurée $\omega_{mes}$. De manière similaire, l'accélération angulaire est donnée par la variation de la valeur de la vitesse mesurée $\omega_{mes}$ entre l'instant considéré et un instant antérieur distant de N périodes. Puisque l'accélération angulaire est calculée à partir de la vitesse mesurée $\omega_{mes}$, nous parlerons d'accélération mesurée $\Omega_{mes}$. L'angle mesuré $\theta_{mes}$, la vitesse mesurée $\omega_{mes}$ et l'accélération mesurée $\Omega_{mes}$ caractérisent l'état dynamique du moteur électrique 10. Il est à noter que le nombre de périodes N est choisi de manière à satisfaire la période d'échantillonnage mécanique. Cette période dépend de la résolution du capteur de position angulaire et de la vitesse de rotation de l'arbre moteur.

Le contrôleur 50 exécute le module d'estimation du couple 61. Ce module permet de calculer une estimation du couple de charge $T_{charge}$ en tant que couple de charge estimé $T_{est}$, à partir de l'intensité filtrée $I_{fil}$, de l'angle mesuré en radians $\theta_{mes}^{rad}$, et d'une variable angulaire d'asservissement $\Delta\theta$. La valeur de la variable d'asservissement $\Delta\theta$ est obtenue en tant que variable de sortie de la boucle de rétroaction 55b. L'obtention de la variable d'asservissement $\Delta\theta$ sera décrite plus bas en relation avec la description de la boucle de rétroaction 55b. Dans le premier mode de réalisation actuellement préféré, le calcul mis en oeuvre par le module d'estimation du couple 61 est un calcul par mode de glissement. En variante, d'autres méthodes de calcul, telles qu'un calcul non linéaire fondé sur un réseau de neurones, un calcul linéaire fondé sur un modèle Proportionnel Intégral Différentiel (PID) ou un calcul à base de logique flou, permettraient d'estimer le couple de charge.

Finalement, le module de modélisation de l'étrier 65c permet de calculer la valeur de la force de serrage estimée $F_{est}$ à partir de la valeur du couple de charge estimé $T_{est}$. Le module de modélisation de l'étrier 65c fait intervenir une modélisation de l'étrier 3 qui tient compte, par exemple, du rapport du mécanisme de réduction 15, des pertes par frottement à travers la vis à billes 20 etc., de manière à estimer la valeur de la force de serrage exercée par la plaquettes de frein 6 et 7 sur le disque de frein 4.

La boucle de rétroaction 55b va maintenant être décrite en détail.

Dans un premier temps, l'exécution de la boucle de rétroaction 55b a pour but d'estimer la valeur d'un angle de rotation de l'arbre 13 en tant qu'angle estimé $\theta_{est}$. Puis, dans un deuxième temps, l'exécution de la boucle de rétroaction 55b a pour but de calculer la valeur de la variable d'asservissement $\Delta\theta$.

Le calcul de l'angle estimé $\theta_{est}$ débute par le calcul d'une accélération estimée $\Omega_{est}$ au moyen de l'équation (3) ci-dessus, dans laquelle le couple de charge $T_{charge}$ est le couple de charge estimé $T_{est}$, l'intensité $i(t)$ est l'intensité filtrée $I_{fil}$, et la vitesse angulaire $\omega_{est}$ la vitesse mesurée $\omega_{mes}$. Ces trois informations constituent les grandeurs d'entrée de la boucle de rétroaction 55b.

Lors de l'exécution du module de friction 74, la force de frottement, qui est une force de frottement mesurée $f_{mes}$, est calculée par multiplication de la vitesse mesurée $\omega_{mes}$ par un coefficient de frottement F prédéterminé mémorisé dans la mémoire 57. Lors de l'exécution du module de couple électromagnétique 69, le couple électromagnétique mesurée est calculé par multiplication de l'intensité mesurée $I_{mes}$ par le coefficient K prédéterminé mémorisé dans la mémoire 57.

Le module d'estimation de l'accélération 63 permet d'obtenir la valeur estimée de l'accélération $\Omega_{est}$ par addition du couple électromagnétique mesuré $KI_{mes}$, addition du frottement mesuré $f_{mes}$, et par soustraction du couple de charge estimé $T_{est}$, puis par division du résultat par le moment cinétique J prédéterminé mémorisé dans la mémoire 57.

Le module d'addition d'accélération 70 permet d'ajouter à l'accélération estimée $\Omega_{est}$ un gain en accélération $G_{\Omega}$, dont le calcul sera décrit plus bas. L'intégrateur d'accélération 71 permet d'intégrer temporellement le terme d'accélération obtenu en sortie du module d'addition d'accélération 70 pour calculer la valeur d'une vitesse estimée $\omega_{est}$.

Le module d'addition de vitesse 72 ajoute à la vitesse estimée $\omega_{est}$ un gain en vitesse $G_{\omega}$, dont le calcul sera décrit plus bas. L'intégrateur de vitesse 73 intègre temporellement le terme de vitesse angulaire obtenu en sortie du module d'addition de vitesse 72 pour calculer la valeur de l'angle de rotation estimé $\theta_{est}$.

Le module d'asservissement 68 de la boucle de rétroaction 55b permet de calculer la variable de régulation $\Delta\theta$ par différence entre l'angle mesuré en radians $\theta_{mes}^{rad}$ et l'angle estimé $\theta_{est}$. En variante, la variable de régulation $\Delta\theta$ pourrait être obtenue au moyen d'une autre fonction de l'angle mesuré en radians $\theta_{mes}^{rad}$ et de l'angle estimé $\theta_{est}$.

Une fois que la variable d'asservissement $\Delta\theta$ est calculée, l'exécution du bloc de calcul de gain 62 permet de calculer le gain en accélération $G_{\Omega}$ et le gain en vitesse $G_{\omega}$ à partir de la valeur de la variable d'asservissement $\Delta\theta$. Dans le mode de réalisation actuellement préféré, les gains en vitesse et accélération sont simplement proportionnels à la valeur de la variable d'asservissement $\Delta\theta$. Le choix des valeurs respectives des constantes de proportionnalité utilisées dans le module de gain en vitesse 62a et le module de gain en accélération 62b, font partie de l'ajustement des paramètres du programme d'estimation de 1a force 55 pour que la force estimée $F_{est}$ corresponde à la force réellement appliquée par les plaquettes de frein 6 et 7.

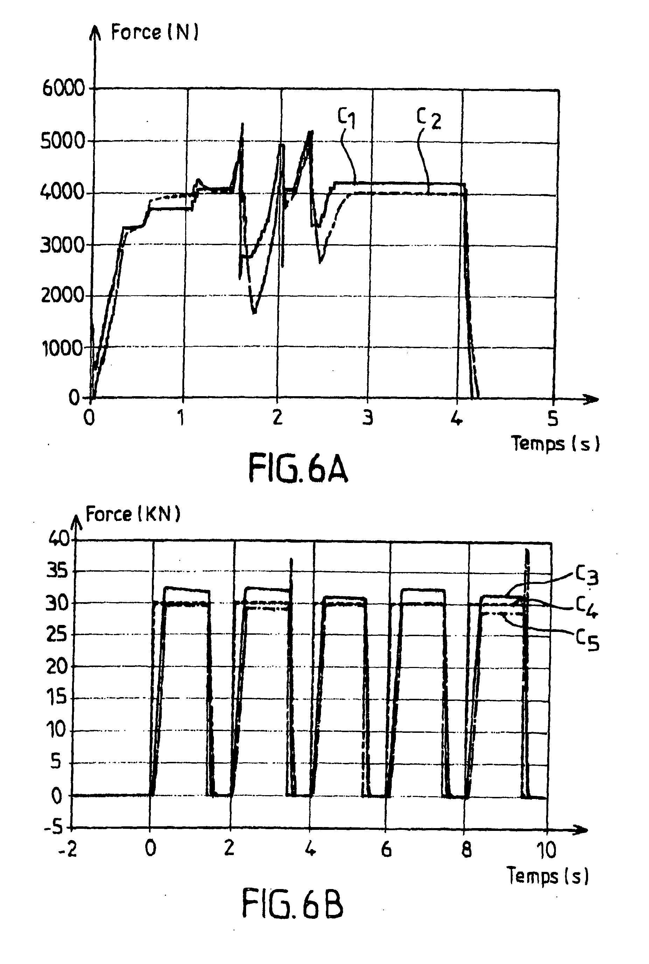

La figure 6A représente des évolutions temporelles de la force de serrage au cours d'un premier test typique de l'utilisation d'un étrier de frein électromécanique. Lors de ce premier test, la boucle de régulation telle que schématisée sur la figure 4 est ouverte.

La courbe C1 représente la force de serrage mesurée $F_{mes}$ par un capteur de force de serrage au cours de ce test.

La courbe C2 représente la force de serrage estimée $F_{est}$ au moyen du programme d'estimateur de la force 55 de la figure 5 au cours du même test. La courbe C2 reproduit fidèlement, à un décalage temporel près, la courbe C1.

La figure 6B représente des évolutions temporelles de la force de serrage au cours d'un deuxième test typique de l'utilisation d'un étrier de frein électromécanique. Lors de ce deuxième test, la boucle de régulation telle que schématisée sur la figure 4 est fermée, et l'étrier électromécanique 3 est régulé au moyen de la force de serrage estimée.

La courbe C4, en pointillés, représente la force de serrage cible $F_{req}$ requise par le calculateur de freinage. Il s'agit d'un signal en créneaux. La courbe C3 représente la force de serrage mesurée $F_{mes}$ et la courbe C5 représente la force de serrage estimée $F_{est}$ au moyen du programme d'estimation de la force 55 de la figure 5.

La figure 7 représente schématiquement un deuxième mode de réalisation du dispositif, dans lequel l'étrier 3' comporte un capteur de force de serrage. Le contrôleur 50 possède un moyen d'acquisition 58c de la valeur de la force de serrage mesurée $F_{mes}$, en plus des moyens permettant le calcul d'une force de serrage estimée $F_{est}$ tels qu'ils ont été décrits ci-dessus.

Le commutateur 54' applique une force de régulation $F_{fbk}$ sur la borne d'entrée négative du module de comparaison 51. En fonction de l'état dans lequel est placé le commutateur 54', la force de régulation $F_{fbk}$ est soit la force de serrage mesurée $F_{mes}$ soit la force de serrage estimée $F_{est}$.

Par ailleurs, l'exécution du module d'écart 54 conduit au calcul d'un écart g par différence entre la valeur de la force mesurée $F_{mes}$ et la valeur de la force estimée $F_{est}$. Des outils de diagnostic 53' mettent en oeuvre des stratégies de diagnostic afin de calculer périodiquement les valeurs de variables d'état caractérisant le fonctionnement de l'étrier 3' en fonction de la valeur de l'écart g. En particulier, une variable S, parmi ces variables d'état, est une variable binaire commandant la commutation du commutateur 54' d'un état à l'autre. Par exemple, lorsque le capteur de force 33 de l'étrier 3' est endommagé, l'écart g devient supérieur à un seuil prédéfini $g_0$ et la variable S bascule de la valeur 0 à la valeur 1. En conséquence, le commutateur 54' ferme la boucle de régulation de la force de serrage au moyen de la force de serrage estimée $F_{est}$.

En variante, tout ou partie des modules, qui sont décrits ci-dessus comme étant constitués d'instructions exécutables par un processeur, pourrait être réalisée sous forme électronique.

Bien que l'invention ait été décrite en liaison avec un mode de réalisation particulier, il est bien évident qu'elle n'y est nullement limitée à celui-ci et qu'elle comprend tous les équivalents techniques des moyens décrits ainsi que leurs combinaisons si celles-ci entrent dans le cadre de l'invention.

**Revendications**

1. Procédé d'estimation de force de serrage dans un étrier de frein électromécanique (3, 3'), ledit étrier électromécanique comportant deux plaquettes de frein (6, 7) placées respectivement de part et d'autre d'un disque de frein (4), un moteur électrique (10) rotatif, un mécanisme de réduction de vitesse et de conversion (15) couplant un arbre (13) dudit moteur électrique à au moins une desdites plaquettes de frein, ledit mécanisme étant apte à convertir le mouvement de rotation dudit arbre moteur (13) en un mouvement de translation desdites plaquettes de frein (6,7) l'une vers ou à l'écart de l'autre selon le sens de rotation dudit arbre, un capteur de position angulaire (31) apte à mesurer un angle de rotation dudit arbre, et un capteur d'intensité apte à mesurer une intensité d'un courant alimentant ledit moteur électrique, **caractérisé en ce que** ledit procédé comporte les étapes consistant à :

   - acquérir une valeur instantanée d'angle de rotation (58a) mesurée par ledit capteur de position angulaire (31) en tant qu'angle mesuré ($\theta_{mes}$, $\theta_{mes}$ $^{deg}$, $\theta_{mes}$ $^{rad}$);
   - acquérir une valeur instantanée d'intensité (58b) mesurée par ledit capteur d'intensité en tant qu'intensité mesurée ($I_{mes}$, $I_{fil}$) ; puis, par une boucle directe (55a), à :
   - estimer une valeur instantanée de couple de charge (61) appliquée sur ledit arbre en tant que couple de charge estimé ($T_{est}$), à partir dudit angle mesuré, de ladite intensité mesurée et d'une variable d'asservissement ($\Delta\theta$) calculée par une boucle de rétroaction (55b) ; et,
   - calculer une valeur instantanée de force de serrage (55c) en tant que force de serrage estimé ($F_{est}$), à partir dudit couple de charge estimé ;

   ladite boucle de rétroaction consistant à :

   - calculer une valeur instantanée d'angle de rotation (63, 69-74) en tant qu'angle estimé ($\theta_{est}$), à partir de grandeurs d'entrée comportant au moins ledit couple de charge estimé et ladite intensité mesurée, en utilisant un modèle linéaire du comportement électrique et mécanique dudit moteur électrique; et,
   - calculer (68) une valeur instantanée de la variable d'asservissement ($\Delta\theta$), par différence entre ledit angle mesuré ($\theta_{mes}$) et ledit angle estimé ($\theta_{est}$).

2. Procédé selon la revendication 1, **caractérisé en ce qu'**il comporte les étapes consistant à :

   - calculer une valeur instantanée de vitesse de rotation (67) en tant que vitesse mesurée ($\omega_{mes}$), à partir dudit angle mesuré ; et,
   - calculer une valeur instantanée de friction (74) en tant que friction mesurée ($f_{mes}$), par multiplication de ladite vitesse mesurée par un coefficient de friction prédéterminé (f) ;

   lesdites grandeurs d'entrée de l'étape de calcul de l'angle estimé comportant, en outre, ladite vitesse mesurée.

3. Procédé selon l'une des revendications 1 à 2, **caractérisé en ce que** l'étape de calcul de l'angle estimé ($\theta_{est}$) comporte les sous étapes consistant à :

   - a) calculer une valeur instantanée de l'accélération de rotation (63) en tant qu'accélération estimée ($\Omega_{est}$), à partir desdites grandeurs d'entrée de la boucle de rétroaction (55b) ;
   - c) intégrer (71) ladite accélération estimée pour déterminer une valeur instantanée de vitesse de rotation en tant que vitesse estimée ($\omega_{est}$) ;
   - e) intégrer (73) ladite vitesse estimée pour déterminer une valeur instantanée dudit angle estimé.

4. Procédé selon l'une des revendications 1 à 3, **caractérisé en ce que** la boucle de rétroaction (55b) comporte une étape (62) consistant à calculer un gain en vitesse ($G_\omega$) et un gain en accélération ($G_\Omega$) à partir de ladite variable d'asservissement ($\Delta\theta$), et **en ce que** ledit gain en vitesse et ledit gain en accélération constituent des paramètres dudit modèle linéaire utilisé dans le calcul de l'angle estimé (63, 69-74).

**5.** Procédé selon les revendications 3 et 4 en combinaison, **caractérisé en ce que** ladite étape de calcul de l'angle estimé ($\theta_{est}$) comporte les sous-étapes supplémentaires consistant à :

- b) ajouter (70) ledit gain en accélération ($G_{\Omega}$) à ladite accélération estimée ($\Omega_{est}$) avant ladite intégration de l'accélération (71) pour obtenir ladite vitesse estimée ($\omega_{est}$) ; et,
- d) ajouter (72) ledit gain en vitesse ($G_{\omega}$) à ladite vitesse estimée avant ladite intégration de la vitesse (73) pour obtenir ledit angle estimé.

**6.** Procédé selon la revendication 5, **caractérisé en ce que** ledit gain en vitesse ($G_{\omega}$) et ledit gain en accélération ($G_{\Omega}$) sont respectivement proportionnels à ladite variable d'asservissement ($\Delta\theta$).

**7.** Procédé selon l'une des revendications 1 à 6, **caractérisé en ce que** ledit étrier de frein électromécanique (3') comporte également un capteur de force de serrage (33) apte à mesurer une valeur instantanée de force de serrage appliquée par lesdites plaquettes de frein (6, 7) sur ledit disque de frein (4), et **en ce que** ledit procédé comporte les étapes consistant à :

- acquérir une valeur instantanée de force de serrage (58c) mesurée par ledit capteur de force de serrage en tant que force de serrage mesurée ($F_{mes}$); et,
- comparer (54, 53', 54'), ladite force de serrage estimée ($F_{est}$) avec ladite force de serrage mesurée, pour diagnostiquer des pannes de l'étrier et/ou fermer une boucle de régulation de l'étrier sur ladite force de serrage mesurée ou ladite force de serrage estimée.

**8.** Dispositif pour la mise en oeuvre du procédé selon l'une des revendications 1 à 7, comportant un étrier de frein électromécanique (3, 3') ayant deux plaquettes de frein (6, 7) placées respectivement de part et d'autre d'un disque de frein (4), un moteur électrique (10) rotatif, un mécanisme de réduction de vitesse et de conversion (15) couplant un arbre (13) dudit moteur électrique à au moins une desdites plaquettes de frein, ledit mécanisme étant apte à convertir le mouvement de rotation dudit arbre en un mouvement de translation desdites plaquettes de frein l'une vers ou à l'écart de l'autre selon le sens de rotation dudit arbre, un capteur de position angulaire (31) apte à mesurer un angle de rotation dudit arbre, et un capteur d'intensité apte à mesurer une intensité d'un courant alimentant ledit moteur électrique, **caractérisé en ce que** le dispositif comporte :

- un moyen d'acquisition d'angle de rotation (58a, 66), relié audit capteur de position angulaire pour acquérir des valeurs instantanées d'angle de rotation en tant qu'angle mesuré ($\theta_{mes}$, $\theta_{mes}^{deg}$, $\theta_{mes}^{rad}$);
- un moyen d'acquisition d'intensité (58b), relié audit capteur d'intensité pour acquérir des valeurs instantanées d'intensité en tant qu'intensité mesurée ($I_{mes}$, $I_{fil}$);
- au moins une mémoire (57); et des moyens directs d'estimation de force (55a, 55c) comprenant :
- un module d'estimation du couple (61), apte à estimer le couple de charge ($T_{est}$) appliqué sur ledit arbre à partir de l'angle mesuré, de l'intensité mesurée, ainsi que d'une variable d'asservissement ($\Delta\theta$) obtenue par des moyens de rétroaction (55c) ; et,
- un module de modélisation de l'étrier (65c) apte à calculer la force de serrage estimée ($F_{est}$) à partir du couple de charge estimé,

lesdits moyens de rétroaction comportant :

- un module d'estimation d'angle (63, 69-74), apte à estimer une valeur d'angle de rotation en tant qu'angle estimé ($\theta_{est}$) à partir de grandeurs d'entrée constituées, au moins, par ledit couple de charge estimé et ladite intensité mesurée, en utilisant un modèle linéaire du comportement électrique et mécanique dudit moteur électrique; et,
- un module d'asservissement (68), apte à soustraire ledit angle estimé ($\theta_{est}$) dudit angle mesuré ($\theta_{mes}$) pour déterminer ladite variable d'asservissement ($\Delta\theta$).

**9.** Dispositif selon la revendication 8, **caractérisé en ce qu'**il comporte :

- un module d'état du moteur (67), apte à calculer une valeur de vitesse de rotation en tant que vitesse mesurée ($\omega_{mes}$) à partir de l'angle mesuré ($\theta_{mes}$) ; et,
- un module de friction (74), apte à calculer une friction mesurée ($f_{mes}$) par multiplication de ladite vitesse mesurée par un coefficient de friction prédéterminé (f),

et **en ce que** ladite friction mesurée constitue une grandeur d'entrée desdits moyens de rétroaction (55b).

**10.** Dispositif selon les revendications 8 à 9, **caractérisé en ce que** ledit module d'estimation d'angle comporte :

- un module d'estimation de l'accélération (63), apte à calculer une accélération estimée ($\Omega_{est}$) à partir desdites grandeurs d'entrée ;
- un intégrateur d'accélération (71) apte à déterminer une valeur instantanée d'une vitesse estimée ($\omega_{est}$) à partir de ladite accélération estimée ;
- un intégrateur de vitesse (73) apte à déterminer une valeur instantanée dudit angle de rotation estimé à partir de ladite vitesse estimée.

**11.** Dispositif selon l'une des revendications 8 à 10, **caractérisé en ce que** lesdits moyens de rétroaction (55b) comportent :

- un module de gain en vitesse (62a) ; et,
- un module de gain en accélération (62b) ;

lesdits modules de gain en vitesse et en accélération étant aptes à calculer, respectivement, ledit gain en vitesse ($G_\omega$) et ledit gain en accélération ($G_\Omega$) à partir de la variable d'asservissement ($\Delta\theta$).

**12.** Dispositif selon les revendications 10 et 11, **caractérisé en ce que** ledit module d'estimation d'angle comporte les éléments suivants :

- un module d'addition d'accélération (70), pour ajouter ladite accélération estimée ($\Omega_{est}$) audit gain en accélération ($G_\Omega$) ; et,
- un module d'addition de vitesse (72), pour ajouter ladite vitesse estimée ($\omega_{est}$) audit gain en vitesse ($G_\omega$).

**13.** Dispositif selon l'une la revendications 12, **caractérisé en ce que** lesdits modules de gain en vitesse ($G_\omega$) et en accélération ($G_\Omega$) sont des modules proportionnels dont la variable de sortie est proportionnelle à la variable d'entrée.

**14.** Dispositif selon l'une des revendications 8 à 13, **caractérisé en ce que** ledit étrier de frein électromécanique (3') comporte également un capteur de force de serrage (33) apte à mesurer une valeur instantanée de force de serrage appliquée par lesdites plaquettes de frein (6, 7) sur ledit disque de frein (4), et **en ce que** ledit dispositif comporte :

- un moyen d'acquisition de force de serrage (58c), relié audit capteur de force de serrage pour acquérir des valeurs instantanées de force de serrage ($F_{mes}$);
- un module de diagnostic (54, 53'), pour diagnostiquer des pannes dudit étrier (3, 3') à partir de la force de serrage mesurée ($F_{mes}$) et de la force de serrage estimée en tant que force de serrage mesurée ($F_{est}$) ; et,
- un commutateur (54') possédant deux états pour fermer la boucle de régulation dudit étrier soit sur la force estimée soit sur la force mesurée.

**Claims**

**1.** Method for estimating the clamping force in an electromechanical brake calliper (3, 3'), said electromechanical calliper including two brake pads (6, 7) placed respectively on each side of a brake disc (4), a rotary electric motor (10), a speed reduction and conversion mechanism (15) coupling a shaft (13) of said electric motor to at least one of said brake pads, said mechanism being capable of converting the rotary movement of said motor shaft (13) into a translational movement of said brake pads (6, 7) towards or away from each other depending on the direction of rotation of said shaft, an angular position sensor (31) capable of measuring an angle of rotation of said shaft and an intensity sensor capable of measuring an intensity of a current supplying said electric motor, **characterised in that** said method includes steps consisting in:

- acquiring an instantaneous value for angle of rotation (58a) measured by said angular position sensor (31) as a measured angle ($\theta_{mes}$, $\theta_{mes}^{deg}$, $\theta_{mes}^{rad}$)
- acquiring an instantaneous intensity value (58b) measured by said intensity sensor as a measured intensity ($I_{mes}$, $I_{fil}$); then, by a direct loop (55a), in:
- estimating an instantaneous value for loading torque (61) applied on said shaft as an estimated loading torque

($T_{est}$) from said measured angle, said measured intensity and a control variable ($\Delta\theta$) calculated by a feedback loop (55b); and

- calculating an instantaneous value for clamping force (55c) as an estimated clamping force ($F_{est}$) from said estimated loading torque,

said feedback loop consisting in:

- calculating an instantaneous value for angle of rotation (63, 69-74) as an estimated angle ($\theta_{est}$) from input magnitudes including at least said estimated loading torque and said measured intensity, using a linear model of the electrical and mechanical behaviour of said electric motor; and
- calculating (68) an instantaneous value for the control variable ($\Delta\theta$) by the difference between said measured angle ($\theta_{mes}$) and said estimated angle ($\theta_{est}$)

2. Method according to claim 1, **characterised in that** it includes steps consisting in:

- calculating an instantaneous value for rotational speed (67) as a measured speed ($\omega_{mes}$) from said measured angle; and
- calculating an instantaneous value for friction (74) as a measured friction ($f_{mes}$) by multiplication of said measured speed by a predetermined coefficient of friction (f);

said input magnitudes from the step for calculating the estimated angle also including said measured speed.

3. Method according to one of claims 1 to 2, **characterised in that** the step for calculating the estimated angle ($\theta_{est}$) includes sub-steps consisting in:

- a) calculating an instantaneous value for angular acceleration (63) as an estimated acceleration ($\Omega_{est}$) from said input magnitudes from the feedback loop (55b)
- c) integrating (71) said estimated acceleration to determine an instantaneous value for rotational speed as an estimated speed ($\omega_{est}$)
- e) integrating (73) said estimated speed to determine an instantaneous value for said estimated angle

4. Method according to one of claims 1 to 3, **characterised in that** the feedback loop (55b) includes a step (62) consisting in calculating a speed gain ($G_{\omega}$) and an acceleration gain ($G_{\Omega}$) from said control variable ($\Delta\theta$) and **in that** said speed gain and said acceleration gain constitute parameters of said linear model used in calculating the estimated angle (63, 69-74).

5. Method according to claims 3 and 4 in combination, **characterised in that** said step to calculate the estimated angle ($\theta_{est}$) includes supplementary sub-steps consisting in:

- b) adding (70) said acceleration gain ($G_{\Omega}$) to said estimated acceleration ($\Omega_{est}$) before said integration of the acceleration (71) to obtain said estimated speed ($\omega_{est}$); and,
- d) adding (72) said speed gain ($G_{\omega}$) to said estimated speed before said integration of the speed (73) to obtain said estimated angle.

6. Method according to claim 5, **characterised in that** said speed gain ($G_{\omega}$) and said acceleration gain ($G_{\Omega}$) are respectively proportional to said control variable ($\Delta\theta$).

7. Method according to one of claims 1 to 6, **characterised in that** said electromechanical brake calliper (3') also includes a clamping force sensor (33) capable of measuring an instantaneous value for the clamping force applied by said brake pads (6, 7) on said brake disc (4), and **in that** said method includes steps consisting in:

- acquiring an instantaneous value for clamping force (58c) measured by said clamping force sensor as a measured clamping force ($F_{mes}$); and,
- comparing (54, 53', 54'), said estimated clamping force ($F_{est}$) with said measured clamping force to diagnose calliper faults and/or close a calliper control loop on said measured clamping force or said estimated clamping force.

8. Device for implementing the method according to one of claims 1 to 7, including an electromechanical brake calliper (3, 3') with two brake pads (6, 7) placed respectively on each side of a brake disc (4), a rotary electric motor (10), a speed reduction and conversion mechanism (15) coupling a shaft (13) of said electric motor to at least one of said brake pads, said mechanism being capable of converting the rotary movement of said shaft into a translational movement of said brake pads towards or away from each other depending on the direction of rotation of said shaft, an angular position sensor (31) capable of measuring an angle of rotation of said shaft and an intensity sensor capable of measuring an intensity of a current supplying said electric motor, **characterised in that** the device includes:

- a means for acquiring an angle of rotation (58a, 66) connected to said angular position sensor to acquire instantaneous values for angle of rotation as a measured angle ($\theta_{mes}$, $\theta_{mes}^{deg}$, $\theta_{mes}^{rad}$)
- a means for acquiring intensity (58b) connected to said intensity sensor to acquire instantaneous values for intensity as a measured intensity ($I_{mes}$, $I_{fil}$)
- at least one memory (57)

and direct means for estimating force (55a, 55c) including:

- a module for estimating torque (61) capable of estimating the loading torque ($T_{est}$) applied on said shaft from the measured angle, the measured intensity, and a control variable ($\Delta\theta$) obtained by feedback means (55c); and,
- a module for modelling the calliper (65c) capable of calculating the estimated clamping force ($F_{est}$) from the estimated loading torque,

said feedback means including:

- a module for estimating angle (63, 69-74) capable of estimating a value for angle of rotation as an estimated angle ($\theta_{est}$) from input magnitudes made up of, at least, said estimated loading torque and said measured intensity, using a linear model of the electrical and mechanical behaviour of said electric motor; and,
- a control module (68) capable of subtracting said estimated angle ($\theta_{est}$) from the measured angle ($\theta_{mes}$) to determine said control variable ($\Delta\theta$).

9. Device according to claim 8, **characterised in that** it includes:

- a motor state module (67) capable of calculating a value for rotational speed as a measured speed ($\omega_{mes}$) from the measured angle ($\theta_{mes}$); and,
- a friction module (74) capable of calculating a measured friction ($f_{mes}$) by multiplying said measure speed by a predetermined coefficient of friction (f),

and **in that** said measured friction constitutes an input magnitude for said feedback means (55b).

10. Device according to claims 8 to 9, **characterised in that** said angle estimation module includes:

- a module for estimating acceleration (63) capable of calculating an estimated acceleration ($\Omega_{est}$) from said input magnitudes
- an acceleration integrator (71) capable of determining an instantaneous value for an estimated speed ($\omega_{est}$) from said estimated acceleration
- a speed integrator (73) capable of determining an instantaneous value for said estimated angle of rotation from said estimated speed.

11. Device according to one of claims 8 to 10, **characterised in that** said feedback means (55b) include:

- a speed gain module (62a); and,
- an acceleration gain module (62b),

said speed gain and acceleration gain modules being capable of calculating, respectively, said speed gain ($G_\omega$) and said acceleration gain ($G_\Omega$) from the control variable ($\Delta\theta$).

12. Device according to claims 10 and 11, **characterised in that** said angle estimation module includes the following elements:

- an acceleration addition module (70) to add said estimated acceleration ($\Omega_{est}$) to said acceleration gain ($G_\Omega$); and,
- a speed addition module (72) to add said estimated speed ($\omega_{est}$) to said speed gain ($G_\omega$).

**13.** Device according to one of claims 12, **characterised in that** said speed gain ($G_\omega$) and acceleration gain ($G_\Omega$) modules are proportional modules whose output variable is proportional to the input variable.

**14.** Device according to one of claims 8 to 13, **characterised in that** said electromechanical brake calliper (3') also includes a clamping force sensor (33) capable of measuring an instantaneous value for the clamping force applied by said brake pads (6, 7) on said brake disc (4), and **in that** said device includes:

- a means for acquiring clamping force (58c) connected to said clamping force sensor to acquire instantaneous values for clamping force ($F_{mes}$)
- a diagnostic module (54, 53') to diagnose faults in said calliper (3, 3') from the measured clamping force ($F_{mes}$) and the estimated clamping force as a measured camping force ($F_{est}$); and,
- a switch (54') having two states to close the control loop of said calliper either on the estimated force or on the measured force

**Patentansprüche**

**1.** Verfahren zur Abschätzung der Spannkraft in einem elektromechanischen Bremssattel (3, 3'), wobei der elektromechanische Sattel zwei Bremsbeläge (6, 7), die jeweils auf beiden Seiten einer Bremsscheibe (4) angebracht sind, einen elektrischen Rotationsmotor (10), einen Mechanismus zur Reduktion der Geschwindigkeit und zur Umwandlung (15), welcher eine Achse (13) von dem elektrischen Motor mit zumindest einem der Bremsbeläge koppelt, wobei der Mechanismus geeignet ist, die Rotationsbewegung der Motorachse (13) in eine Translationsbewegung der Bremsbeläge (6, 7), den einen hinwärts zu oder weg von dem anderen gemäß der Drehrichtung der Achse, umzuwandeln, einen Winkelpositionssensor (31), der geeignet ist, einen Rotationswinkel der Achse zu messen, und einen Intensitätssensor aufweist, der geeignet ist, eine Intensität eines Stroms zu messen, der den elektrischen Motor versorgt, **dadurch gekennzeichnet, dass** das Verfahren die Schritte aufweist, die bestehen aus:

- Erlangen eines momentanen Wertes des Rotationswinkels (58a), der durch den Winkelpositionssensor (31) gemessen wird, als gemessener Winkel ($\Theta_{mes}$, $\Theta_{mes}{}^{deg}$, $\Theta_{mes}{}^{rad}$);
- Erlangen eines momentanen Wertes der Intensität (58b), die durch den Intensitätssensor gemessen wird, als gemessene Intensität ($I_{mes}$, $I_{fil}$);
- Schätzen eines momentanen Wertes des Lastmoments (61), das auf die Achse angewendet wird, als geschätzter Lastmoment ($T_{est}$), aus dem gemessenen Winkel, der gemessenen Intensität und einer Steuerungsvariablen ($\Delta\Theta$), die durch eine Rückkopplungsschleife (55b) berechnet wird,
- Berechnen eines momentanen Wertes der Spannkraft (55c) als geschätzte Spannkraft ($F_{est}$), aus dem geschätzten Lastmoment;

wobei die Rückkopplungsschleife besteht aus:

- Berechnen eines momentanen Wertes des Rotationswinkels (63, 69-74) als geschätzter Winkel ($\Theta_{est}$), aus den Eingangsgrößen, die zumindest das geschätzte Lastmoment und die gemessene Intensität aufweisen, unter Verwendung eines linearen Modells des elektrischen und mechanischen Verhaltens des elektrischen Motors; und
- Berechnen (68) eines momentanen Wertes der Steuerungsvariablen ($\Delta\Theta$), durch die Differenz zwischen dem gemessenen Winkel ($\Theta_{mes}$) und dem geschätzten Winkel ($\Theta_{est}$).

**2.** Verfahren gemäß Anspruch 1, **dadurch gekennzeichnet, dass** es die Schritte aufweist, die bestehen aus:

- Berechnen eines momentanen Wertes der Rotationsgeschwindigkeit (67) als gemessene Geschwindigkeit ($\omega_{mess}$), aus dem gemessenen Winkel; und
- Berechnen eines momentanen Wertes der Reibung (74) als gemessene Reibung ($f_{mess}$), aus der Multiplikation der gemessenen Geschwindigkeit mit einem vorbestimmten Reibungskoeffizienten (f);

wobei die Eingangsgrößen des Schritts des Berechnens des geschätzten Winkels des Weiteren die gemessene

**EP 1 482 290 B1**

Geschwindigkeit aufweisen.

3. Verfahren gemäß einem der Ansprüche 1 bis 2, **dadurch gekennzeichnet, dass** der Schritt des Berechnens des geschätzten Winkels ($\Theta_{est}$) die Schritte unten aufweist, die bestehen aus:

- a) Berechnen eines momentanen Wertes der Rotationsbeschleunigung (63) als geschätzte Beschleunigung ($\Omega_{est}$), aus den Eingangsgrößen der Rückkopplungsschleife (55b);
- c) Integrieren (71) der geschätzten Beschleunigung, um einen momentanen Wert der Rotationsgeschwindigkeit als geschätzte Geschwindigkeit ($\omega_{est}$) zu bestimmen;
- e) Integrieren (73) der geschätzten Geschwindigkeit, um einen momentanen Wert des geschätzten Winkels zu bestimmen.

4. Verfahren gemäß einem der Ansprüche 1 bis 3, **dadurch gekennzeichnet, dass** die Rückkopplungsschleife (55b) einen Schritt (62) aufweist, der aus dem Berechnen einer Geschwindigkeitsverstärkung ($G_\omega$) und einer Beschleunigungsverstärkung ($G_\Omega$) aus der Steuerungsvariablen ($\Delta\Theta$) besteht, und dass die Geschwindigkeitsverstärkung und die Beschleunigungsverstärkung Parameter des linearen Modells darstellen, das in der Berechnung des geschätzten Winkels (63, 69-74) verwendet wird.

5. Verfahren gemäß den Ansprüchen 3 und 4 in Kombination, **dadurch gekennzeichnet, dass** der Schritt des Berechnens des geschätzten Winkels ($\Theta_{est}$) die zusätzlichen Schritte unten aufweist, die bestehen aus:

- b) Hinzufügen (70) der Beschleunigungsverstärkung ($G_\Omega$) zu der geschätzten Beschleunigung ($\Omega_{est}$) vor der Integration der Beschleunigung (71), um die geschätzte Geschwindigkeit ($\omega_{est}$) zu erhalten; und
- d) Hinzufügen (72) der Geschwindigkeitsverstärkung ($G_\omega$) zu der geschätzten Geschwindigkeit vor der Integration der Geschwindigkeit (73), um den geschätzten Winkel zu erhalten.

6. Verfahren gemäß Anspruch 5, **dadurch gekennzeichnet, dass** die Geschwindigkeitsverstärkung ($G_\omega$) und die Beschleunigungsverstärkung ($G_\Omega$) jeweils proportional zu der Steuerungsvariablen ($\Delta\Theta$) sind.

7. Verfahren gemäß einem der Ansprüche 1 bis 6, **dadurch gekennzeichnet, dass** der elektromechanische Bremssattel (3') auch einen Spannkraftsensor (33) aufweist, der geeignet ist, einen momentanen Wert der Spannkraft zu messen, die durch die Bremsbeläge (6, 7) auf die Bremsscheibe (4) angewendet wird, und dass das Verfahren die Schritte aufweist, die bestehen aus:

- Erlangen eines momentanen Werts der Spannkraft (58c), der durch den Spannkraftsensor gemessen wird, als die gemessene Spannkraft ($F_{mes}$); und
- Vergleichen (54, 53', 54') der geschätzten Spannkraft ($F_{est}$) mit der gemessenen Spannkraft, um Störungen des Sattels zu diagnostizieren und/oder einen Regelkreis des Sattels auf die gemessene Spannkraft oder die geschätzte Spannkraft zu schließen.

8. Vorrichtung zur Ausführung des Verfahrens gemäß den Ansprüchen 1 bis 7, aufweisend einen elektromechanischen Bremssattel (3, 3'), wobei der elektromechanische Sattel zwei Bremsbeläge (6, 7), die jeweils auf beiden Seiten einer Bremsscheibe (4) angebracht sind, hat, einen elektrischen Rotationsmotor (10), einen Mechanismus zur Reduktion der Geschwindigkeit und zur Umwandlung (15), welcher eine Achse (13) von dem elektrischen Motor mit zumindest einem der Bremsbeläge koppelt, wobei der Mechanismus geeignet ist, die Rotationsbewegung der Achse in eine Translationsbewegung der Bremsbeläge (6, 7), den einen hinwärts zu oder weg von dem anderen gemäß der Drehrichtung der Achse, umzuwandeln, einen Winkelpositionssensor (31), der geeignet ist, einen Rotationswinkel der Achse zu messen, und einen Intensitätssensor, der geeignet ist, eine Intensität eines Stroms zu messen, der den elektrischen Motor versorgt, **dadurch gekennzeichnet, dass** die Vorrichtung aufweist:

- ein Mittel zur Erlangung eines Rotationswinkels (58a, 66), verbunden mit dem Winkelpositionssensor, um die momentanen Werte des Rotationswinkels als gemessenen Winkel ($\Theta_{mes}$, $\Theta_{mes}^{deg}$, $\Theta_{mes}^{rad}$) zu erlangen;
- ein Mittel zur Erlangung einer Intensität (58b), verbunden mit dem Intensitätssensor, um die momentanen Werte der Intensität als gemessene Intensität ($I_{mes}$, $I_{fil}$) zu erlangen;
- ein Speichermittel (57);

und Direktmittel zur Schätzung der Kraft (55a, 55c), die aufweisen:

- ein Modul zur Schätzung des Moments (61), welches geeignet ist, das Lastmoment ($T_{est}$), das auf die Achse angewendet wird, aus dem gemessenen Winkel, der gemessenen Intensität sowie einer Steuerungsvariablen ($\Delta\Theta$), die durch Rückkopplungsmittel (55c)erhalten wird, zu schätzen; und

- ein Modul der Modellierung des Sattels (65c), welches geeignet ist, die geschätzte Spannkraft ($F_{est}$) aus dem geschätzten Lastmoment zu berechnen, wobei die Rückkopplungsmittel aufweisen:

- ein Modul zur Schätzung des Winkels (63, 69-74), welches geeignet ist, einen Wert des Rotationswinkels als geschätzten Winkel ($\Theta_{est}$) aus den Eingangsgrößen zu schätzen, die zumindest aus dem geschätzten Lastmoment und der gemessenen Intensität gebildet sind, unter Verwendung eines linearen Modells des elektrischen und mechanischen Verhaltens des elektrischen Motors; und

- ein Modul zur Steuerung (68), welches geeignet ist, den geschätzten Winkel ($\Theta_{est}$) von dem gemessenen Winkel ($\Theta_{mes}$) abzuziehen, um die Steuerungsvariable ($\Delta\Theta$) zu erhalten.

9.  Vorrichtung gemäß Anspruch 8, **dadurch gekennzeichnet, dass** sie aufweist:

- ein Motorstatusmodul (67), welches geeignet ist, einen Wert der Rotationsgeschwindigkeit als gemessene Geschwindigkeit ($\omega_{mess}$) aus dem gemessenen Winkel ($\Theta_{mes}$) zu berechnen; und

- ein Reibungsmodul (74), welches geeignet ist, eine gemessene Reibung ($f_{mess}$) durch Multiplikation der gemessenen Geschwindigkeit mit einem vorbestimmten Reibungskoeffizienten (f) zu berechnen,

und dass die gemessene Reibung eine Eingangsgröße der Rückkopplungsmittel (55b) darstellen.

10. Vorrichtung gemäß den Ansprüchen 8 bis 9, **dadurch gekennzeichnet, dass** das Modul zur Schätzung des Winkels aufweist:

- ein Modul zur Schätzung der Beschleunigung (63), welches geeignet ist eine geschätzte Beschleunigung ($\Omega_{est}$) aus den Eingangsgrößen zu berechnen;

- einen Beschleunigungsintegrator (71), welcher geeignet ist, einen momentanen Wert einer geschätzten Geschwindigkeit ($\omega_{est}$) aus der geschätzten Beschleunigung zu bestimmen;

-einen Geschwindigkeitsintegrator (73), welcher geeignet ist, einen momentanen Wert des geschätzten Rotationswinkels aus der geschätzten Geschwindigkeit zu bestimmen.

11. Vorrichtung gemäß einem der Ansprüche 8 bis 10, **dadurch gekennzeichnet, dass** die Rückkopplungsmittel (55b) aufweisen:

- ein Geschwindigkeitsverstärkungsmodul (62a); und
- ein Beschleunigungsverstärkungsmodul (62b);

wobei die Geschwindigkeitsverstärkungs- und Beschleunigungsverstärkungsmodule geeignet sind, jeweils die Geschwindigkeitsverstärkung ($G_\omega$) und die Beschleunigungsverstärkung ($G_\Omega$) aus der Steuerungsvariablen ($\Delta\Theta$) zu berechnen.

12. Vorrichtung gemäß den Ansprüchen 10 und 11, **dadurch gekennzeichnet, dass** das Modul zur Schätzung des Winkels die folgenden Elemente aufweist:

- ein Modul zum Hinzufügen der Beschleunigung (70), um die geschätzte Beschleunigung ($\Omega_{est}$) zu der Beschleunigungsverstärkung ($G_\Omega$) hinzuzufügen; und

- ein Modul zum Hinzufügen der Geschwindigkeit (72), um die geschätzte Geschwindigkeit ($\omega_{est}$) zu der Geschwindigkeitsverstärkung ($G_\omega$) hinzuzufügen.

13. Vorrichtung gemäß Anspruch 12, **dadurch gekennzeichnet, dass** die Module der Geschwindigkeitsverstärkung ($G_\omega$) und der Beschleunigungsverstärkung ($G_\Omega$) proportionale Module sind, deren Ausgangsvariable proportional zu der Eingangsvariablen ist.

14. Vorrichtung gemäß einem der Ansprüche 8 bis 13, **dadurch gekennzeichnet, dass** der elektromechanische Bremssattel (3') auch einen Spannkraftsensor (33) aufweist, der geeignet ist, einen momentanen Wert der Spannkraft zu messen, die durch die Bremsbeläge (6, 7) auf die Bremsscheibe (4) angewendet wird, und dass die Vorrichtung aufweist:

- ein Modul zur Erlangung der Spannkraft (58c), verbunden mit dem Spannkraftsensor, um die momentanen Werte der Spannkraft ($F_{mes}$) zu erlangen;
- ein Modul der Diagnose (54, 53'), um Störungen des Sattels (3, 3') aus der gemessenen Spannkraft ($F_{mes}$) und der geschätzten Spannkraft als gemessene Spannkraft ($F_{est}$) zu diagnostizieren; und
- einen Umwandler (54'), welcher zwei Zustände besitzt, um den Regelkreis des Sattels entweder auf die geschätzte Kraft oder auf die gemessene Kraft zu schließen.

FIG.1

FIG. 3    ART ANTERIEUR

42

43

44

45a   45b   45c

41

46

39

40

Electronique
de
puissance

32

36

3 ou 3'

37

38

58   59   58   58   49

56a

56b

56a

55

57

50

60

FIG.2

FIG.4

FIG.7

FIG.5

FIG.6A

FIG.6B

**EP 1 482 290 B1**

## RÉFÉRENCES CITÉES DANS LA DESCRIPTION

### Documents brevets cités dans la description

- DE 10205013 A